# EUROPÄISCHE PATENTANMELDUNG

(11) **EP 0 792 714 A1**
(43) Veröffentlichungstag der Anmeldung: **03.09.1997**
(21) Anmeldenummer: 97103197.6
(22) Anmeldetag: 27.02.1997
(51) Int. Cl.: B23H 7/10

(54) **Drahtlaufsystem für eine Funkenerosionsvorrichtung**

(30) Priorität: 29.02.1996 DE 19607705
(71) Anmelder: AG für industrielle Elektronik AGIE Losone bei Locarno, CH-6616 Losone/Locarno (CH)
(72) Erfinder: Medici, Brenno, 6695 Peccia (CH); Wehrli, Peter, 6611 Auressio (CH)

(57) **Zusammenfassung**

Die Erfindung betrifft ein Drahtlaufsystem für eine Funkenerosionsvorrichtung mit wenigstens einer Drahtelektrode, wobei Drahtzufuhr-, Drahtspannungs-, und/oder Drahtabfuhrmittel derart ausgebildet sind, dass der Drahtlauf insgesamt automatisiert ist. Insbesondere wird der Draht mittels eines Fluids automatisch von der Drahtbevorratung zur Bearbeitungsstelle transportiert. Durch Vermeidung von Gleichlaufschwankungen ergibt sich ein ruhigerer Drahttransport, wodurch die Bearbeitungsqualität positiv beeinflusst wird. Zusäzlich wird die Zuverlässigkeit erhöht.

## Beschreibung

Die Erfindung betrifft ein Drahtlaufsystem für eine Funkenerosionsvorrichtung mit wenigstens einer Drahtelektrode, Drahtzufuhr-, Drahtspannungs- und Drahtabfuhrmitteln. Hierzu gehören in der Regel eine Drahtbevorratung, wie etwa eine oder mehrere Vorratsspulen, Transportmittel, welche den Draht von der Vorratsspule zu einem Arbeitsbereich hin und von dort wieder weg transportieren, Spannmittel, welche den Draht unter eine für die Werkstückbearbeitung geeignete Arbeitszugspannung setzen, und Entsorgungsmittel, welche den gebrauchten Draht entsorgen.

Eine Vorrichtung zum teilweise automatischen Transport des Drahtes vom Abwicklungsbereich (A) bis zur Arbeitszone ist bereits aus der DE 34 19 944 C1 (Fig.4) der Anmelderin bekannt. Diese Ausführungsform ist technisch sehr aufwendig. Die Betriebssicherheit ist nicht zufriedenstellend, weil der Draht im Fehlerfall austreten und zum Bearbeitungsunterbruch führen kann. Weiterhin ergeben sich beim Drahtvorschub mittels dieser Bandführungselemente, insbesondere bei Umlenkungen, Geschwindigkeitsunterschiede zwischen den beiden den Draht umgebenden Bandführungselemente. Diese können sich dann in Form von Gleichlaufschwankungen auf den Draht übertragen. Weiterhin unterliegen die Bandführungselemente einem beachtlichen Verschleiss. Schliesslich sind die Bandführungselemente für eine Komplettlösung nicht geeignet, da zum einen Bewegungen der Maschinenteile erfolgen, die durch die Bandführungselemente nicht kompensiert werden können, andererseits beeinflusst jede Übernahme bzw. Übergabe des Drahtes die Betriebssicherheit negativ.

Bei der Drahtentnahme können Schwingungen dadurch entstehen, dass der Draht in mehreren Lagen über- und nebeneinander auf seiner Vorratsspule aufgewickelt ist. Um diese Schwingungen zu vermeiden, muss die Abzugsrichtung des Drahtes möglichst senkrecht gegenüber der Achse der Drahtvorratsrolle sein. In der US 5,281,787 wird diese Aufgabe mit einer Zwischenrolle erreicht, die geometrisch derart ausgebildet ist, dass sie den Draht unabhängig vom momentanen Ablösepunkt auf der Vorratsrolle immer gerade entnimmt. Eine derart ausgebildete Zwischenrolle würde aber zuviel Raum beanspruchen, denn je grösser der Drahtdurchmesser, desto grösser muss der Krümmungsradius bei Umlenkrollen sein, damit unerwünschte Verformungen des Drahtes vermieden werden. Die Rolle müsste bereits an ihrer engsten Stelle den für Umlenkrollen üblichen Durchmesser haben.

Die gleiche Aufgabe wird in DE 89 12 810 U1 durch axiales Verschieben der ganzen Drahtvorratsrolle bewerkstelligt, was ebenfalls zuviel Raum beansprucht, und zudem eines entsprechenden Antriebes bedarf.

Im folgenden wird eine bekannte Vorrichtung zur Steuerung des Motors der Drahtvorratsspule beschrieben. Hierbei ist der Draht hinter der bzw. den Stabilisierungsumlenkrollen gegenläufig, d.h. einmal im Uhrzeigersinn und einmal gegen den Uhrzeigersinn, um eine bzw. zwei weitere Umlenkrollen geführt. Dabei ist wenigstens eine dieser beiden Umlenkrollen durch Federmittel elastisch nachgiebig befestigt. Messmittel ermitteln über die Position dieser Umlenkrolle, der Federmittel und/oder weiterer Hilfsmittel die jeweils anliegende Drahtzugspannung bzw. die zugrundeliegende Kraft und eine Steuereinrichtung steuert den Spulenmotor diesen Messwerten und/oder Sollwerten entsprechend. Auf diese Weise ist zwischen der Drahtvorratsspule und den Bremsmitteln eine bestimmte Grundspannung wirksam. Diese Grundspannung ist einstellbar, was bei der Verwendung unterschiedlicher Drahttypen von Bedeutung ist. Beispielsweise erfordert die Verwendung feinerer Drähte eine entsprechend niedrigere Grundspannung.

Es sind bereits mehrere Offenbarungen zum Thema Drahtwechsler bzw. Mehrfachdrahtbevorratung getätigt worden. All diese Offenbarungen weisen jedoch wesentliche Nachteile auf, insbesondere muss der Draht meistens in aufwendiger Weise manuell zum Drahtführungskopf transportiert werden. Als Verbesserung werden Verfahren zur Verbindung des alten und des neuen Drahtes offenbart. Die US 5,340,958 beansprucht eine Drahtwechselvorrichtung bei der zum Einlegen des neuen Drahtes in das Drahtlaufsystem die Drahtenden des alten und des neuen Drahtes durch eine Schweissung verbunden werden. Mehrere Einschränkungen sind diesbezüglich zu nennen. Um eine neue Elektrode einzuziehen, muss bereits eine Drahtelektrode im Drahtantrieb vorhanden sein, ansonsten muss der Draht wiederum manuell eingelegt werden. Ausserdem werden vielfach unterschiedliche Drahtdurchmesser und Drahtqualitäten eingesetzt, wodurch eine zuverlässige Verbindung nicht gesichert ist. Die DE 34 19 944 C1 zeigt zwar in Fig 6 bereits eine Mehrfachbevorratung die den Draht einem Zufuhrbereich übergibt, es sind jedoch motorisierte Haltemittel erforderlich die zudem für jede Drahtrolle einzeln ansteuerbar sein müssen. Eine Drahtübernahme ohne Haltemittel ist nicht sicher gewährleistet.

In der DE 34 19 944 C1 werden vor dem ersten Führungskopf angeordnete Bremsmittel beschrieben die es ermöglichen, das Werkstück unter einer stärkeren Drahtzugspannung zu bearbeiten, als im Drahtzuführungsbereich anliegt. Infolgedessen sind die Bauteile im letzteren Bereich einem geringeren Verschleiss ausgesetzt. Eine bedeutend niedrigere Zugspannung im Draht beim Ablösen von der Drahtvorratsspule zwischen einer nachfolgenden Bremse und Zugrollen ist insbesondere deswegen sinnvoll, da eine zu hohe Kraft im ersten Bereich zum Blockieren des Drahtes auf der Spule führen würde. Bei den erwähnten Bremsmitteln umschlingt der eingefädelte Draht wenigstens nahezu einmal eine von einem Bremsmotor angetriebene Bremsrolle. Dabei befindet sich der Draht mit der Bremsrolle aufgrund von Reibungskräften in Wirkeingriff.

Aus der EP-541126 ist das Einstellen der Arbeitszugspannung der Drahtelektrode durch unterschiedliche Geschwindigkeiten des Zug- und Bremsmotors bekannt.

Die Bremsrolle kann in einem Gehäuse angeordnet sein. In der Schrift DE 34 19 944 C1 sind diverse Vorrichtungen zur Automatisierung des Einfädelvorgangs für diesen Bereich des Drahtlaufsystems beschrieben. U.a. wird eine Vorrichtung beschrieben bei der der Draht durch eine Öffnung in das Gehäuse eintritt und zunächst im Wesentlichen tangential an der Bremsrolle anliegt. Dabei lässt wenigstens eine weitere Öffnung zumindest während des Einfädelns Fluidströme ein, welche im Wesentlichen zur Bremsrolle tangential sind und den Draht um die Bremsrolle herumführen. Hierdurch ist ein nahezu verschleissfreier, automatischer Einfädelvorgang möglich.

In der US 5,073,691 werden Drahtentsorgunsmittel beschrieben. Diese beinhalten eine Ansaugdüse und wenigstens ein Rohr nach dem zweiten Führungskopf. Dabei saugt die Ansaugdüse zumindest während des Einfädelns den Draht zusammen mit einem Fluid an und transportiert ihn durch das Rohr zum Zugmotor. Auf diese Weise kann der Einfädelvorgang im Bereich Drahtabfuhr automatisiert werden, ohne dass besonders verschleissanfällige Bauteile eingefügt werden müssen. Insbesondere im Vergleich zu bekannten Riementransportsystemen ist dies vorteilhaft. Änderungen der Bewegungsrichtung des Drahtes erfolgen dabei bevorzugt durch Umlenkrollen, welche zumindest während des Einfädelns durch einen Fluidstrahl angetrieben werden. Dies ermöglicht widerum eine präzise und schwingungsarme Drahtentsorgung.

Zur Reduzierung des Volumens des verbrauchten Drahtes kann hinter dem Zugmotor eine Drahtschneidevorrichtung angeordnet sein. Bei Einstellung einer zur Drahtlaufgeschwindigkeit proportionalen Drehzahl wird gewährleistet, dass der Draht bei seiner Entsorgung, unabhängig von seiner Laufgeschwindigkeit, in gleich lange Stücke zerteilt wird. Dadurch können Stauungen im Entsorgungsbehälter vermieden werden. Eine solche Vorrichtung ist in EP-198229 der Anmelderin beschrieben.

Die verwendeten Umlenkrollen und/oder die Bremsrolle sind üblicherweise als zylindrische Scheibe ausgebildet, in deren Mantelfläche eine gleichmässig umlaufende Rille vorgesehen ist. Dabei verjüngt sich die Rille symmetrisch zur Mantelmitte und in Richtung der Scheibenmitte. Solche Rollen ermöglichen eine praktisch schwingungsfreie, präzise Drahtführung und verbessern so die Bearbeitungsqualität am Werkstück. Sie sind zudem in gleicher Weise für Drähte unterschiedlicher Durchmesser geeignet. Insbesondere im Falle der Bremsrolle wird durch eine solche V-Nut die Reibungskraft zwischen der Bremsrolle und dem Draht erhöht.

Die einzelnen Bestandteile eines Drahtlaufsystems können auf unterschiedliche Weise ausgeführt werden. Dem Stand der Technik sind insbesondere für den Bearbeitungsbereich und für den Abfuhrbereich zufriedenstellende Lösungen zu entnehmen. Nicht zufriedenstellend sind insbesondere die bisher bekannten Lösungen im Zufuhrbereich.

Ausgehend vom genannten Stand der Technik hat sich die Erfindung zur Aufgabe gemacht, ein hinsichtlich Qualität, Zuverlässigkeit und Automatisation verbessertes Gesamtkonzept des Drahtlaufsystems aufzuzeigen. Diese Verbesserungen betreffen insbesondere den Zufuhrbereich.

Erfindungsgemäss wird dieses Ziel durch den Gegenstand des Anspruchs 1 erreicht, also durch eine derart in einem Drahtlaufsystem einer Funkenerosionsmaschine ausgelegte Rohranordnung, dass die Drahtelektrode in zwingender Weise und automatisch vom Abwicklungsbereich (A) bis zur Arbeitszone führbar ist.

Vorzugsweise sind nach dem Abwicklungsbereich, d.h. hinter der bzw. den Stabilisierungsumlenkrolle(n) oder weiteren Umlenkrollen, eine Injektordüse und ein oder mehrere Rohr(e) angeordnet. Dabei saugt die Injektordüse den Draht zumindest während des Einfädelns an und transportiert ihn dann mittels einer Fluidströmung durch das bzw. die Rohr(e) weiter bis zur Arbeitszone (Anspruch 2). Diese Massnahme ermöglicht eine teilweise Automatisierung des Einfädelvorgangs. Die Handhabung der Maschine wird so vereinfacht und Arbeitszeit eingespart. Vorzugsweise erfolgen dabei Änderungen der Bewegungsrichtung des Drahtes in dem bzw. den Rohr(en) durch Umlenkrollen (Anspruch 3). So wird ein reibungsarmer Drahtlauf ermöglicht. Dieser Effekt wird noch gesteigert, wenn ein Fluidstrahl die Umlenkrollen antreibt (Anspruch 4). Derartige Rollen ermöglichen einen Drahttransport unter minimaler Reibung. Infolgedessen werden Verformungen vermieden, Schwingungen und Verschleiss reduziert und die Gefahr eines Drahtbruchs verringert.

In einer bevorzugten Ausführungsform ist eine gemäss Anspruch 1 ausgebildete Rohranordnung zumindest teilweise teleskopisch ausgebildet (Anspruch 24). Diese Massnahme verhindert Verspannung und Verformung der Rohranordnung insbesondere bei Bewegung einzelner Maschinenbauteile.

Vorzugsweise sind die Gehäuse der Umlenkrollen auf Drehachsen montiert, da die einzelnen Maschinenbauteile Relativbewegungen ausführen können, die Umlenkeinheiten jedoch stets zueinander ausgerichtet sein sollen (Anspruch 5). Auch diese Massnahme ist insbesondere bei Bewegung einzelner Maschinenbauteile zweckmässig und verhindert Verspannung und Verformung der Rohranordnung.

Bevorzugt trifft die Verlängerung der Drehachse des Umlenkrollengehäuses mit dem Ablösepunkt des Drahtes von der Umlenkrolle und vorzugsweise auch mit dem Drahtlauf unmittelbar vor bzw. nach dem jeweiligen Umlenkrollengehäuse im Wesentlichen zusammen (Anspruch 6). Auf diese Weise wird sichergestellt, dass die Ortskoordinaten des Drahtablösepunktes trotz der Drehung des Umlenkrollengehäuses konstant bleiben, der weitergeführte Draht also keine Lageänderung erfährt was zur Reduzierung von Gleichlaufschwankungen des Drahtes beiträgt.

In einer weiteren bevorzugten Ausführungsform ist der von der Vorratsspule abgewickelte Draht zunächst um wenigstens eine Stabilisierungsumlenkrolle geführt. Dabei ist bzw. sind diese Stabilisierungsumlenkrolle(n) an einem Schwenkarm angebracht (Anspruch 7) . Auf diese Weise ist es möglich, longitudinale Schwingungen, d.h. solche in Drahtvorschubrichtung, des Drahtes zu minimieren. Solche Schwingungen würden normalerweise dadurch entstehen, dass der Draht in mehreren Lagen über- und nebeneinander auf seiner Vorratsspule aufgewickelt ist. Eine auf einem Schwenkarm gelagerte Stabilisierungsumlenkrolle kann diesem Verlauf folgen und Sprünge über die jeweiligen Nachbarlagen vermeiden bzw. ihre Auswirkung begrenzen. Der gesamte Drahtlauf wird somit gleichmässiger, der Draht selbst weniger verformt und die Bearbeitungsqualität am Werkstück dementsprechend verbessert. Insbesondere kann so die Rauhigkeit der Bearbeitungsoberfläche verringert werden.
Die Erfindung zeichnet sich gegenüber den bekannten Lösungen insbesondere durch geringen Raumbedarf und geringere Kosten aus.

Vorzugsweise ist die Drehachse des Schwenkarms zu der Drehachse der Vorratsspule und/oder zu der bzw. den Drehachse(n) der Stabilisierungsumlenkrolle(n) im Wesentlichen senkrecht angeordnet (Anspruch 8) . Auf diese Weise kann der Schwenkarm der Drahtanordnung auf der Vorratsspule besonders gleichmässig folgen.

In einer weiteren bevorzugten Ausführungsform liegen der Ablösepunkt des Drahtes von der bzw. der ersten Stabilisierungsumlenkrolle und jeder Ablösepunkt des Drahtes von der Vorratsspule während eines Abwickelvorgangs fortwährend im Wesentlichen senkrecht übereinander (Anspruch 9) . Hierdurch werden insbesondere "Sprünge" des Drahtes über benachbarte Lagen vermieden und somit ein besonders gleichmässiger Drahtlauf gewährleistet.

Bevorzugt trifft die Verlängerung der Drehachse des Schwenkarms mit dem Ablösepunkt des Drahtes von der (bzw. der letzten) Stabilisierungsumlenkrolle und vorzugsweise auch mit dem Drahtlauf unmittelbar nach der letzten Stabilisierungsumlenkrolle im Wesentlichen zusammen (Anspruch 10) . Auf diese Weise wird sichergestellt, dass die Ortskoordinaten des Drahtablösepunktes trotz der Drehung des Schwenkarms konstant bleiben, der weitergeführte Draht also keine Lageänderung erfährt. Die Reduzierung von Gleichlaufschwankungen des Drahtes wird auch hier besonders wirkungsvoll erreicht.

Weiterhin ist der Drahtabwicklungsbereich vorzugsweise ganz oder teilweise doppelt oder mehrfach ausgebildet und dabei sind vorzugsweise zusätzliche Hilfsmittel zur Übergabe des Drahtes an die Injektordüse vorgesehen (Anspruch 12) . Auf diese Weise kann der Spulenwechsel weitgehend oder vollständig automatisiert werden.
Das erfindungsgemässe Drahtlaufsystem ist derart ausgebildet, dass der sich im Einzugsbereich der Injektordüse befindliche Draht zwangsläufig in das Transportrohr geführt wird. Im Vorratsbereich sind, nebst dem/den Spulenmotor(en) keine weiteren Drahtvorschubmittel erforderlich. Diese Lösung stellt somit eine deutliche Vereinfachung gegenüber dem Stand der Technik dar.

In einer weiteren bevorzugten Ausführungsform wird die Drahtelektrode mittels eines Fluids um die Bremsrolle geführt (Anspruch 18). Diese Ausführungsform ermöglicht ein nahezu verschleissfreies, automatisches Einlegen des Drahtes in diesen Bereich des Drahtlaufsystems. Gegenüber den bekannten Ausfürungsformen ist eine einfachere Ausbildung des Bremsrollengehäuse möglich.

Alternativ sind für den selben Bereich des Drahtlaufsystems Einfädelmittel bevorzugt, bei welchen der Draht mittels eines flexiblen Führungsrohres um die Bremsrolle geführt wird (Anspruch 19).

Bei einer bevorzugten Ausführungsform weist die Bremsrolle in ihrer Umfangoberfläche Schrägungen auf, welche den Draht bei der Rotation der Bremsrolle zwangsläufig in die V-Nut führen (Anspruch 29). Das manuelle Einlegen des Drahtes auf die Bremsrolle wird erleichtert.

Weitere bevorzugte Ausführungsformen ergeben sich aus den Unteransprüchen

Im Folgenden wird die Erfindung anhand von Ausführungsbeispielen und der beiliegenden Zeichnungen noch näher erläutert.
In der Zeichnung ist:
- Fig. 1: eine schematische Darstellung eines Drahtlaufsystems;
- Fig. 2 und 3: schematische Darstellungen von Drahtabwickelvorrichtungen; und
- Fig. 4 bis 9: schematische Darstellungen und/oder Querschnitte verschiedener Ausführungsformen eines Bremsrollensystems.

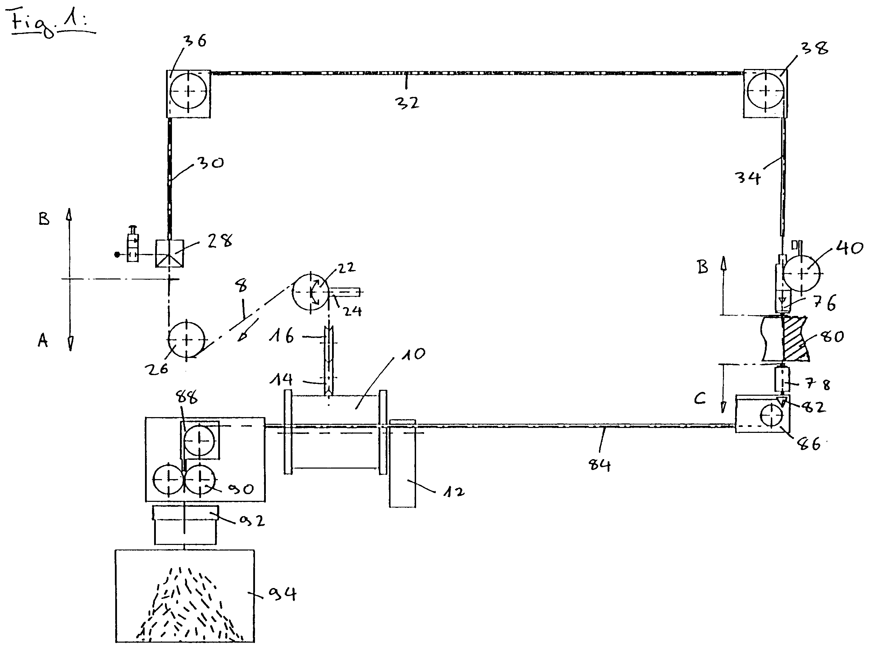

Fig. 1 gibt eine Übersicht über ein erfindungsgemässes Drahtlaufsystem für eine Funkenerosionsvorrichtung. Dabei erscheint es zweckmässig, drei Bereiche zu unterscheiden, welche die eigentliche Arbeitszone (bei Werkstück 80) umgeben. Vor der Arbeitszone sind ein Abwicklungsbereich A und ein Zufuhrbereich B angeordnet. Nach der Arbeitszone folgt ein Entsorgungsbereich C.

Wesentlich für die vorliegende Erfindung sind nun sowohl die Ausgestaltungen der einzelnen Bereiche A, B und C, als auch ihr Zusammenwirken. Es erscheint daher zweckmässig, zunächst die Bereiche einzeln darzustellen.
In einem entsprechenden ersten Teil (I) der folgenden Beschreibung bleiben all diejenigen Merkmale unberücksichtigt, welche nur für das Zusammenwirken der Bereiche von Bedeutung sind. In einem darauffolgenden zweiten Abschnitt (II) der Beschreibung wird das Zusammenwirken der einzelnen Teilbereiche erläutert.

### I. Die einzelnen Teilbereiche

### 1. Der Abwicklungsbereich A

Wie aus Fig. 1 hervorgeht, befindet sich der Draht 8, welcher durch das Drahtlaufsystem transportiert wird, zunächst auf einer Vorratsspule 10. Dabei ist es unumgänglich, dass der Draht 8 in mehreren Lagen über- und nebeneinander um den Kern der Vorratsspule 10 gewickelt ist. Dies führt zu Unregelmässigkeiten und Schwankungen beim Abwickelvorgang, welche durch den erfindungsgemässen Abwicklungsbereich A minimiert werden sollen.

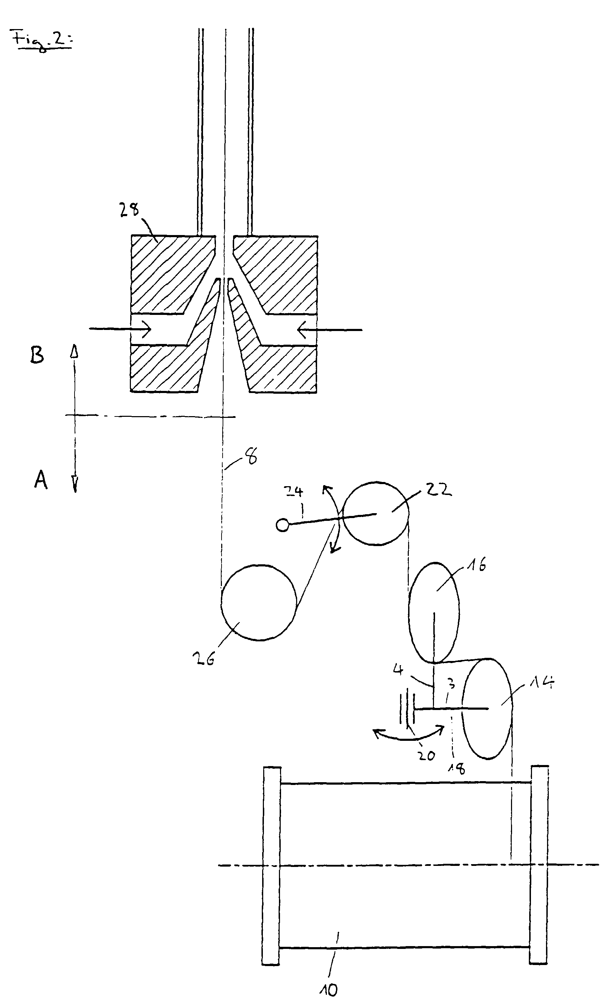

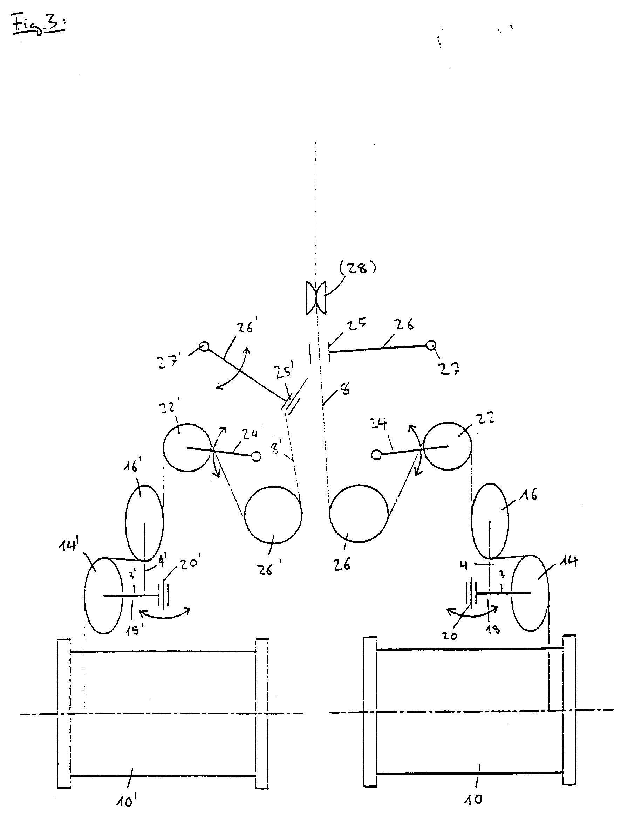

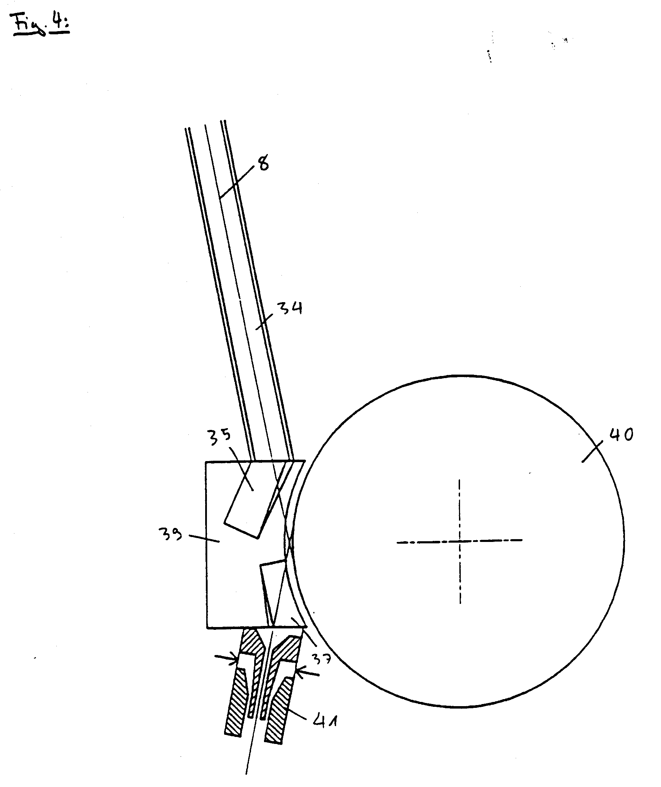

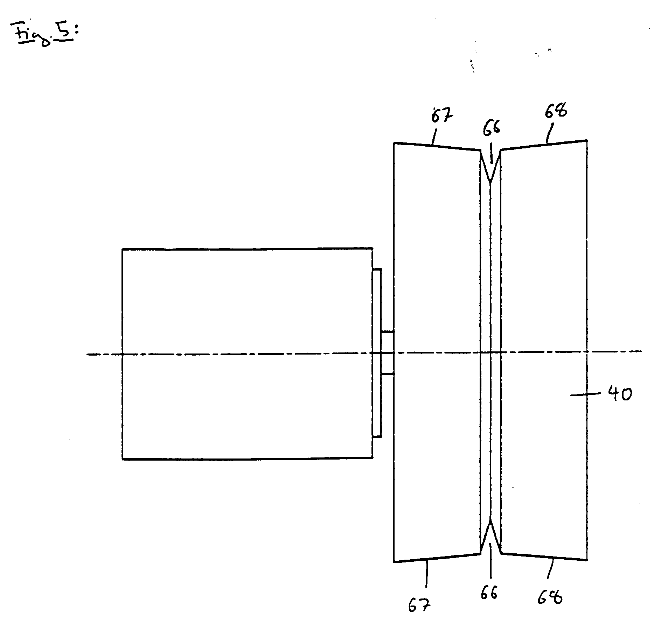

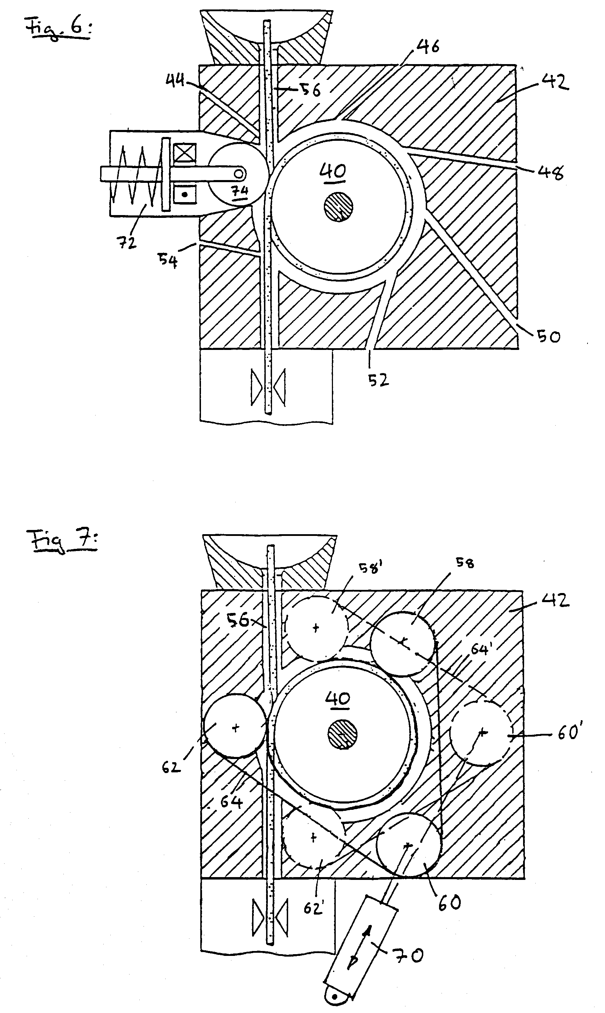

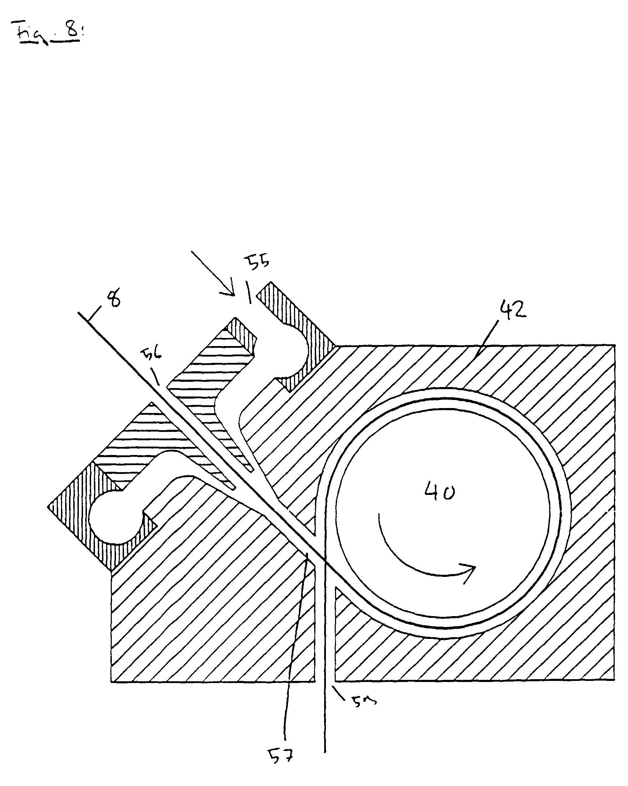

Einen erfindungsgemässen Abwicklungsbereich A zeigt Fig. 2. Er beginnt bei der Vorratsspule 10, und endet vor einer Injektordüse 28. Zwischen der Vorratsspule 10 und der Injektordüse 28 sind insgesamt 4 Stabilisierungsumlenkrollen 14, 16, 22, 26 angeordnet. Der Draht 8 wird auf die folgende Weise um diese Stabilisierungsumlenkrollen 14, 16, 22, 26 geführt: Zunächst umläuft er das rechte obere Viertel einer ersten Stabilisierungsumlenkrolle 14 entgegen dem Uhrzeigersinn; dann das linke untere Viertel einer zweiten Stabilisierungsumlenkrolle 16 im Uhrzeigersinn; im Anschluss umläuft er die obere Hälfte einer dritten Stabilisierungsumlenkrolle 22 entgegen dem Uhrzeigersinn; und schliesslich die untere Hälfte der verbleibenden vierten Stabilisierungsumlenkrolle 26 im Uhrzeigersinn.

Alle vier Stabilisierungsumlenkrollen 14, 16, 22, 26 sind drehbar um ihre jeweilige Mittelachse gelagert. Dabei sind die erste und zweite Stabilisierungsumlenkrolle 14, 16 an einem Schwenkarm 18 angebracht. Die dritte und die vierte Stabilisierungsumlenkrolle 22, 26 sind hingegen über Federmittel 24 bzw. unmittelbar an der Funkenerosionsmaschine befestigt.
Gemäss der Darstellung in Fig. 2 befindet sich der Schwenkarm 18 oberhalb der Vorratsspule 10. Er ist an der Funkenerosionsmaschine drehbar um eine Drehachse 20 angeordnet. Dabei liegt die Drehachse 20 in einer Vertikalen, während sich die Vorratsspule 10 in einer Horizontalen befindet.

Der Schwenkarm 18 ist mit zwei Endbereichen 3, 4 ausgebildet. Der erste dieser Endbereiche 3 ist senkrecht zur Drehachse 20 angeordnet. Der zweite Endbereich 4 steht senkrecht auf dem Endbereich 3 und erstreckt sich parallel zur Drehachse 20. Von der Vorratsspule 10 aus gesehen, weist der zweite Endbereich 4 stets senkrecht nach oben.

Am Ende des ersten Endbereichs 3 ist die erste Stabilisierungsumlenkrolle 14 befestigt; am Ende des zweiten Endbereichs 4, die zweite Stabilisierungsumlenkrolle 16. Besonders zweckmässig ist es schliesslich noch, die Drehachse 20 des Schwenkarmes 18 bezüglich des Längsverlaufs der Vorratsspule 10 zu zentrieren.

Der Draht 8 verläuft im Abwicklungsbereich A also folgendermassen: Von der Vorratsspule 10 aus wird er zunächst senkrecht nach oben um das rechte obere Viertel der ersten Stabilisierungsumlenkrolle 14 geführt. Auf diese Weise um etwa 90° umgelenkt, verläuft er horizontal zur Unterseite der zweiten Stabilisierungsumlenkrolle 16. Deren Verlauf im linken unteren Viertel folgend, und somit wieder um etwa 90° umgelenkt, erreicht er senkrecht nach oben weisend die rechte Seite der dritten Stabilisierungsumlenkrolle 22. Dieser folgt er entgegen dem Uhrzeigersinn um annähernd 180°. Sodann verläuft er leicht schräg abwärts zur rechten Seite der vierten Stabilisierungsumlenkrolle 26.
Dieser folgt er wiederum um annähernd 180°, bis er schliesslich senkrecht nach oben in die Injektordüse 28 einmündet.

Das Abwickeln des Drahtes 8 von der Vorratsspule 10 verläuft nun folgendermassen: Zunächst befinde sich das freie Ende des Drahtes 8 - wie in Fig. 2 dargestellt auf der rechten Seite der Vorratsspule 10. Sodann werde dieses freie Drahtende manuell in der oben beschriebenen Weise um die Stabilisierungsumlenkrollen 14, 16, 22, 26, und schliesslich in die Injektordüse 28 geführt. Durch weitere, noch zu beschreibende Mittel wird der Draht dann in die nachfolgenden Bereiche des Drahtlaufsystems hineingezogen. Infolgedessen wird er von der Vorratsspule 10 abgewickelt.

Da der Draht 8, wie schon gesagt, spiralförmig um den Kern der Vorratsspule 10 gewickelt ist, wandert das freie Ende des Drahtes 8 von der rechten zur linken Seite der Vorratsspule 10, von dort wieder zurück nach rechts und so weiter. Dieser Hin- und Herbewegung des freien Endes des Drahtes 8 folgt der Schwenkarm 18.

Im Ergebnis ist es so möglich, aus der Wicklung des Drahtes 8 um die Vorratsspule 10 resultierende Schwankungen zu minimieren. Allerdings müssen noch die folgenden Gesichtspunkte bei der Abmessung bzw. Anordnung der oben beschriebenen Bauteile berücksichtigt werden: der Punkt, an welchem der Draht 8 sich wieder von der zweiten Stabilisierungsumlenkrolle 16 löst, muss möglichst exakt auf einer Verlängerung der Drehachse 20 des Schwenkarmes 18 liegen. Gleiches sollte für den Punkt gelten, an welchem der Draht 8 auf die dritte Stabilisierungsumlenkrolle 22 trifft. Der Drahtverlauf zwischen der zweiten Stabilisierungsumlenkrolle 16 und der dritten Stabilisierungsumlenkrolle 22 sollte also mit der Drehachse 20 zusammenfallen.

Als Alternative wäre es aber auch möglich, die Stabilisierungsumlenkrolle 16 im Durchmesser zu vergrössern und dementsprechend weiter entfernt von der Drehachse 20 des Schwenkarms 18 anzubringen, während die Stabilisierlungsumlenkrolle 14 weggelassen wird. Bei einer solchen Ausführungsform wäre lediglich darauf zu achten, dass die äussere Umfangsoberfläche der Vorratsspule 10 vor der Verlängerung der Drehachse 20 des Schwenkarmes 18 bzw. dem hinteren Umfangbereich der Stabilisierungsumlenkrolle 16 angeordnet ist, damit der Draht 8 wenigstens um einen Teilbereich der vergrösserten Stabilisierungsumlenkrolle 16 geführt werden kann.

Als eine weitere Möglichkeit kann es unter Umständen auch ausreichen, lediglich den Ablösepunkt des Drahtes 8 von der zweiten Stabilisierungsumlenkrolle 16 mit der Drehachse 20 zusammenfallen zu lassen. Auf diese Weise kann die dritte Stabilisierungsumlenkrolle 22 flexibler positioniert werden.

Da in den genannten Ausführungsbeispielen der Drahtverlauf unmittelbar nach der zweiten Stabilisierungsumlenkrolle 16 mit der Verlängerung der Drehachse 20 des Schwenkarms 18 zusammenfällt, wirkt sich die Drehbewegung des Schwenkarms nicht auf den dahinter verlaufenden Draht 8 aus. Die Hin- und Herbewegung des Drahtes 8 beim Abwickeln von der Vorratsspule 10 wird also weitestgehend ausgeglichen.

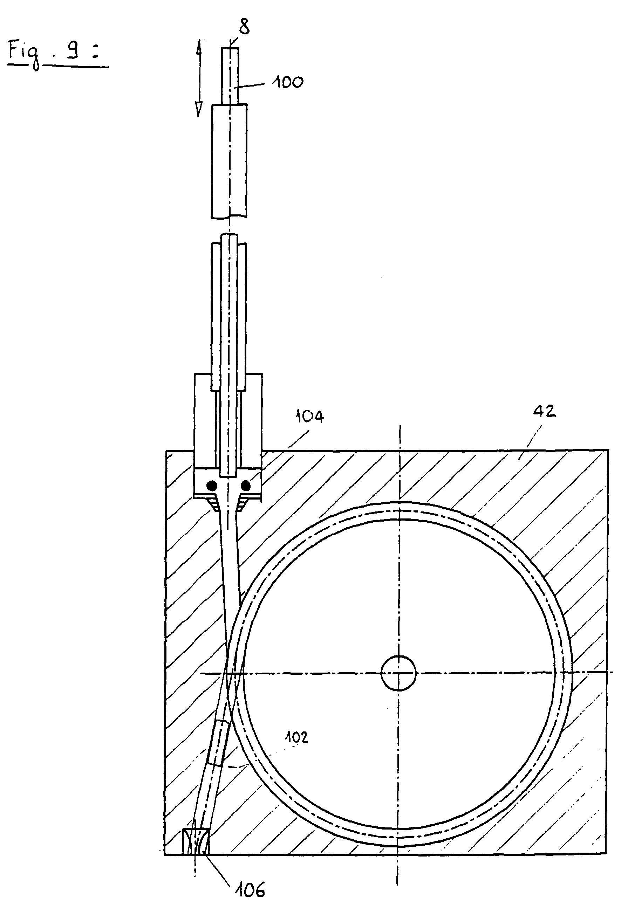

Wie Fig. 3 zeigt, kann der oben beschriebene Abwicklungsbereich A auch mehrfach an der Funkenerosionsmaschine ausgebildet werden. Auf diese Weise ist es möglich, die zum Wechsel der Vorratsspule 10 nötige Unterbrechung der Bearbeitung des Werkstückes 80 auf ein zeitliches Minimum zu reduzieren. Auch kann bei einem weiteren automatisierten Drahtlaufsystem die Anwesenheit eines Operateurs zum Spulenwechsel überflüssig gemacht werden. Im Ergebnis kann so die Zeit, in welcher die Funkenerosionsmaschine "selbständig" arbeitet, maximiert werden. Zudem kann Drahtdurchmesser und/oder Drahtqualität gewechselt auch automatisch werden.

Die in Fig. 3 dargestellte doppelte Ausführungsform des Abwicklungsbereichs A sieht im Wesentlichen einen symmetrisch ausgebildeten Zwilling zur oben erstbeschriebenen Ausführungsform vor. Im Einzelnen finden sich also die folgenden zusätzlichen Bauteile: eine weitere Vorratsspule 10', vier weitere Stabilisierungsumlenkrollen 14', 16', 22', 26', ein weiterer Schwenkarm 18' mit Endbereichen 3' und 4', drehbar gelagert um eine Drehachse 20' und schliesslich ein weiterer Draht 8'.

Für einen automatisierten Spulenwechsel sind ferner zwei Schwenkarme 26, 26' zweckmässig. Diese sind jeweils um Achsen 27 bzw. 27' drehbar gelagert. An ihrem freien Ende 25 bzw. 25' ist je eine Öse ausgebildet. Diese Konstruktion lässt die folgende Vorgehensweise zu: Ein Operateur setzt zwei volle Vorratsspulen 10 bzw. 10' an den dafür vorgesehenen Stellen ein. Sodann führt er beide Drähte 8 bzw. 8' auf die oben beschriebene Weise um die jeweils vorhandenen Stabilisierungsumlenkrollen und schliesslich um die jeweils zugehörige Öse 25 bzw. 25'. Sodann kann beispielsweise durch einen in der Zeichnung nicht dargestellten Motor der Schwenkarm 26 um die Drehachse 27 nach oben verdreht werden. Auf diese Weise kann das freie Ende des Drahtes 8 in dem Einzugsbereich der Injektordüse 28 gebracht werden (Injektordüse 28 ist in Fig. 3 nur schematisch angedeutet) . Das Ende des ersten Drahtes 8 kann beispielsweise über Sensoren erkannt werden. Infolgedessen kann beispielsweise von einer elektronischen Steuerung der Schwenkarm 26 wieder nach unten gedreht und dafür der Schwenkarm 26' um die Drehachse 27' in die entsprechende Einfädelposition gebracht werden.

### 2. Zufuhrbereich B

Der in Fig.1 gekennzeichnete Zufuhrbereich B beginnt mit der Injektordüse 28 und endet mit einem Führungskopf 76 unmittelbar vor der Arbeitszone bzw. dem Werkstück 80. Er umfasst neben den genannten Bauteilen Rohrstücke 30,32,34, fluidgetriebene Umlenkrollen 36, 38 und eine Bremsrolle 40.

Die Injektordüse 28 wird zum Einfädeln des Drahtes 8 in Betrieb genommen und erzeugt einen Fluidstrahl, welcher den Draht durch die Rohre 30, 32 und 34 führt. Die Querschnittform der Rohre ist dabei beliebig (zweckmässig ist beispielsweise eine teleskopische Ausführungsform für Längenänderungen bei Bewegungen einzelner Maschinenbauteile, s.u.). Änderungen der Bewegungsrichtung erfolgen über die fluidgetriebenen Umlenkrollen 36 und 38. Die Bremsrolle 40 ist für die Erzeugung einer definierten Drahtspannung von Bedeutung, Sie wird weiter unten im Punkt II Drahtspannung näher erläutert werden.

Der Draht 8 verläuft im Zufuhrbereich B also folgendermassen: zunächst passiert er die Injektordüse 28 und das darauffolgende Rohrstück 30. Er wird dann durch die fluidgetriebene Umlenkrolle 36 um etwa eine 1/4 Drehung umgelenkt und folgt im Anschluss dem Verlauf des Rohrstückes 32. Nach einer erneuten Umlenkung um etwa eine 1/4 Drehung durch die fluidgetriebene Umlenkrolle 38 erreicht er über das Rohrstück 34 die Bremsrolle 40, welche er einmal umschlingt. Sodann gelangt er über den Führungskopf 76 in die eigentliche Arbeitszone.

Als Fördermittel wird wie bereits erwähnt ein Fluid eingesetzt. Prinzipiell ist jedes Fluid für diese Aufgabe denkbar. Auf einer Funkenerosionsmaschine sind im allgemeinen zwei Fluide in beliebiger Quantität und fast umsonst verfügbar und werden deshalb bevorzugt; es sind dies einerseits die Umgebungsluft, andererseits die dielektrische Arbeitsflüssikeit.

### 3. Entsorgungsbereich C

Der Entsorgungsbereich C ist ebenfalls aus Fig. 1 ersichtlich. Er schliesst sich an die Arbeitszone bei Werkstück 80 unmittelbar an und beginnt mit einem unteren Führungskopf 78. Er endet mit einem Entsorgungsbehälter 94 und umfasst ausserdem eine Absaugdüse 82, ein Rohr 84, zwei Umlenkrollen 86 und 88, Zugrollen 90 und eine Drahtschneidevorrichtung 92.

Der Draht 8 wird zusammen mit einem Einfädelstrahl hinter dem Führungskopf 78 zumindest beim Einfädeln von einer Absaugdüse 82 angesaugt. Daraufhin wird der Draht 8 im Fluidstrahl durch ein im Querschnitt beliebig geformtes Rohr 84 transportiert. Änderungen der Bewegungsrichtung erfolgen über Umlenkrollen 86 und 88. Bei vertikaler Anordnung des Rollenpaares 90 kann man auf die Umlenkrollen 86 und 88 verzichten.

Auf die letzte Umlenkrolle 88 folgen zwei gegenläufige Walzen 90, welche vom Zugmotor angetrieben werden (nicht eingezeichnet) . Dieser erzeugt zusammen mit der Bremsrolle 40 die zur Bearbeitung des Werkstückes 80 notwendige Drahtspannung, welche Prinzipiell beliebig eingestellt bzw. gesteuert werden kann. Zugleich transportiert er den Draht in eine Drahtschneidevorrichtung 92, deren Drehzahl zur Drahtlaufgeschwindigkeit proportional ist. Dadurch wird der Draht in Stücke konstanter Länge zerteilt. Die Drahtstücke werden in einem Entsorgungsbehälter 94 gesammelt.

### II Drahtspannung

### 1 . Prinzip

Das erfindungsgemässe Drahtlaufsystem dient dazu, eine möglichst optimale Drahtelektrode in der Arbeitszone bei Werkstück 80 zu erhalten. Dabei kommt es insbesondere darauf an, in diesem Bereich zu jeder Zeit möglichst exakt eine gewünschte mechanische Drahtspannung einzustellen bzw. aufrechtzuerhalten.

Grundsätzlich erfolgt die Einstellung der gewünschten Drahtspannung über drei Motoren, nämlich dem Spulenmotor 12 und zwei nicht eingezeichneten Motoren, welche die Bremsrolle 40 bzw. die Zugrollen 90 betreiben. Dabei sorgt der zu den Zugrollen 90 gehörige Zugmotor für eine gewünschte Transportgeschwindigkeit des Drahtes 8. Die Bremsrolle 40 hält den Draht 8 zurück und erzeugt so die gewünschte Drahtspannung insbesondere in der Arbeitszone um das Werkstück 80. Zu diesem Zweck wird sie mit einer geeigneten Geschwindigkeit vom zugehörigen Bremsmotor angetrieben.

Die Wechselwirkung zwischen der Bremsrolle 80 und dem Draht 8 beruht auf Seilreibung. Diese wird durch eine Grundspannung erzeugt, welche in den Bereichen A und B bereits am Draht anliegt. Die Grundspannung kann deutlich geringer sein als die gewünschte Arbeitsspannung. Sie wird durch eine geeignete Abwickelgeschwindigkeit bzw. eine entsprechende Einstellung des Spulenmotors 12 erzeugt.

Problematisch sind nun vor allem Änderungen bzw. Schwankungen der Drahtlänge in den einzelnen Teilbereichen, wie sie beim Betrieb einer Funkenerosionsmaschine typischerweise auftreten. Solche Längenänderungen bedingen immer auch Änderungen der Drahtzugspannung und können beispielsweise die folgenden Ursachen haben: im Teilbereich A aufgrund der Wicklung des Drahtes 8 auf der Spule 10; im Teilbereich A und B aufgrund von konischen Schnitten (bei einem konischen Schnitt ändert sich die Drahtlänge in der Arbeitszone bei Werkstück 80). Zugleich muss eine geeignete Relativposition zwischen den Führungsköpfen 76 und 78 sowie dem Werkstück 80 eingestellt werden. Zu diesem Zweck müssen häufig Schlitten bewegt werden, an welchen auch Teile des Zufuhrbereiches B oder zum Teil auch des Abwickelbereichs A befestigt sind. Infolgedessen kann sich beispielsweise die Bogenlänge des Drahtes 8 auf den Umlenkrollen 22 und/oder 26 ändern) ; in allen Teilbereichen schliesslich aufgrund von ungenauer Führung des Drahtes 8 in den verschiedenen Umlenkrollen.
Um der letztgenannten Ursache entgegenzuwirken, sollten nur solche Umlenkrollen Verwendung finden, welche eine gleichmässig umlaufende, V-förmige Rille aufweisen, in welcher jeweils der Draht 8 geführt wird. Auf diese Weise ist es möglich, den gespannten Draht 8 bezüglich der einzelnen Umlenkrollen jeweils zu zentrieren und ein Verrutschen zu vermeiden.

Soweit Längenänderungen des Drahtes 8 im Teilbereich A darauf beruhen, dass der Draht 8 spiralförmig von links nach rechts bzw. von rechts nach links auf der Spule 10 aufgewickelt ist, können diese Längenänderungen durch den erfindungsgemässen Schwenkarm 18 ausgeglichen werden.

Die verbleibenden Längenänderungen bzw. Schwankungen des Drahtes 8 werden auf die folgende Weise ausgeglichen: im Teilbereich A ist die Umlenkrolle 22 über Federmittel 24 an der Funkenerosionsmaschine befestigt. Infolgedessen besteht ein Zusammenhang zwischen der räumlichen Lage der Umlenkrolle 22 und der im Draht 8 anliegenden Zugspannung. Verwendet man daher beispielsweise einen Sensor, um laufend die jeweils aktuelle Position der Umlenkrolle 22 festzustellen, so kann man mit den so erhaltenen Daten beispielsweise den Spulenmotor 12 steuern. Auf diese Weise kann man letztlich erreichen, dass die Position der Umlenkrolle 22 und somit die im Draht 8 anliegende Zugspannung trotz auftretender Längenänderungen des Drahtes möglichst konstant bleibt.

### 2. Ausführungsformen

Aus Gründen der Wirtschaftlichkeit ist es erstrebenswert, den Einfädelvorgang für den Draht 8 möglichst weitgehend zu automatisieren. Es ist daher wichtig, bei der konkreten Ausgestaltung des oben beschriebenen erfindungsgemässen Drahtlaufsystems darauf zu achten, dass die einzelnen Bauteile auch für eine solche Automatisierung geeignet sind. Soweit der Einfädelvorgang manuell auszuführen ist, sollten die entsprechenden Bauteile dies möglichst leicht machen. Im Folgenden werden noch einige Varianten vorgestellt, wie bei dem erfindungsgemässen Drahtlaufsystem auch solche Gesichtspunkte berücksichtigt werden können. Sie betreffen vor allem die unterschiedlichen Ausgestaltungen der Bremsrolle 40 bzw. der sie umgebenden Bauteile.

Fig. 4 zeigt eine Bremsrolle 40, um welche der Draht 8 manuell geführt wird. Um dies zu erleichtern, schliesst sich an das Rohrstück 34 eine manuelle Einfädelhilfe 39 an, Diese wird ergänzt durch eine Injektordüse 41. An der manuellen Einfädelhilfe 39 sind zwei Einlaufnuten 35 und 37 ausgebildet. Diese führen den Draht jeweils in eine einfach greifbare Position. Die Einlaufnut 37 erlaubt ein sicheres Einführen des Drahtes in die Injektordüse 41.
Der Einfädelvorgang läuft also beispielsweise wie folgt ab: der Draht 8 wird durch das Rohrstück 34 und die Einlaufnut 35 geführt (sofern die manuelle Einfädelhilfe 39 aus einem verschleissfesten, elektrisch leitenden Material besteht, kann an dieser Stelle eine automatische Drahtpräsenzdetektion getätigt werden). Sodann legt ein Operateur den Draht um die Bremsrolle 40 und von dort in die Einlaufnut 37. Den weiteren Einfädelvorgang übernimmt die Injektordüse 41.

Fig. 5 zeigt eine sowohl hier wie auch bei den noch zu erläuternden Ausführungsformen der Umgebung der Bremsrolle 40 besonders zweckmässige Ausgestaltung der Aussenoberfläche der Bremsrolle 40 selbst. Danach weist die Bremsrolle in ihrer Umfangoberfläche Schrägungen 67 und 68 auf, welche den Draht 8 in eine V-Nut 66 führen. Dabei ist die V-Nut 66 bezüglich der Bremsrolle 40 zentriert. Im Ergebnis wird so eine möglichst exakte Drahtführung erreicht.

Fig. 6 zeigt eine für eine automatische Drahteinfädelung geeignete Umgebung der Bremsrolle 40. Dabei befindet sich die Bremsrolle 40 im Inneren eines Gehäuses 42, an welchen Öffnungen für Fluidstrahlen 44 bis 54 ausgebildet sind. Ferner kann zur Unterstützung eine Anpressrolle 74 und ein Anpressmechanismus 72 vorgesehen werden.

Der Draht 8 kann nun auf die folgende Weise eingefädelt werden: Er gelangt durch das dritte Rohrstück 34 zu einer Öffnung 56 im Gehäuse 42 der Bremsrolle 40. Zum Einfädeln werden durch weitere Gehäuseöffnungen 44, 46, 48, 50, 52 und 54 Fluidstrahlen tangential zur Bremsrolle 40 eingeblasen. Diese legen den sich beim Einfädeln verschiebenden Draht 8 überall an die Bremsrolle 40 an. Zusätzlich kann das Herumführen des Drahtes 8 durch eine entsprechende Drehbewegung der Bremsrolle 40 unterstützt werden. Infolgedessen umschlingt der Draht 8 nach dem Einfädelvorgang die Bremsrolle 40 (vergleiche EP-161657). Die Anpressrolle 74 und der Anpressmechanismus 72 geben den Draht 8 beim Einfädelvorgang frei und pressen ihn danach an die Bremsrolle 40. Auf diese Weise wird bei einem Drahtbruch im Arbeitsbereich verhindert, dass sich der Draht von der Bremsrolle löst und anschliessend nicht mehr vorwärts bewegt bzw. eingefädelt werden kann.

Fig. 7 zeigt eine weitere Ausgestaltung der Umgebung der Bremsrolle 40. Sie sieht ebenfalls ein Gehäuse 42 vor. Allerdings entfallen die Fluidöffnungen 44 bis 54. Statt dessen ist ein Einfädelriemen 64 vorgesehen, welcher mit Hilfe von drei Rollen 58, 60, 62 um einen Teilbereich der Bremsrolle 40 gelegt wird.

In dieser Ausführungsvariante wird der Draht 8 wie folgt eingefädelt: Zu Beginn des Einfädelvorganges befinden sich die Rollen in der Position 58, 60 bzw. 62. Der Einfädelriemen liegt mithin so an der Bremsrolle 40 an, dass der sich beim Einfädeln vorwärtsbewegende Draht 8 sich zwischen den anliegenden Teilbereich des Einfädelriemens 64 und die Bremsrolle 40 schiebt. Ein pneumatisch, elektrisch oder hydraulisch angetriebener Zylinder 70 dreht die Rollen daraufhin in eine Position 58', 60' bzw. 62' und damit auch den Einfädelriemen 64 und insbesondere dessen an die Bremsrolle 40 anliegenden Teilbereich in die Position 64'. Gleichzeitig dreht sich die Bremsrolle 40 wenigstens solange gegen den Uhrzeigersinn, bis der Draht 8 sie umschlungen hat und wieder aus dem Gehäuse austritt. Dies ist möglich, da die Rollen 58, 60, 62 und der Einfädelriemen 64 in der Position 58', 60', 62' bzw. 64' den Weg dazu freigeben.

Die in Fig. 8 dargestellte Alternative zeigt eine Vorrichtung zum automatischen Umschlingen der Bremsrolle durch Zufuhr eines Fluids, insbesondere durch Zufuhr von Luft. Zu diesem Zweck befindet sich die Bremsrolle 40 wiederum in einem Gehäuse 42. Der Draht 8 wird durch eine Öffnung 56 in ein Kanalsystem 57 im Inneren des Gehäuses 42 eingeführt. Durch eine Öffnung 55 wird ein Fluid eingeblasen. Hierdurch wird der Draht 8 durch das Kanalsystem 57 hindurch und um die Bremsrolle 40 herum geführt, bis er das Gehäuse 42 wieder durch eine Öffnung 59 verlässt.

In Fig. 9 schliesslich befindet sich die Bremsrolle 40 wiederum in einem Gehäuse 42. Der Draht 8 wird entweder im Anschluss an das Rohrstück 34 oder noch im Inneren des Rohrstücks 34 durch ein flexibles Führungsrohr 100 geführt. Dieses flexible Führungsrohr 100 ist axial beweglich. Sobald der Draht in das Gehäuse 42 eintritt, passiert er einen Detektor 104. Hierdurch wird eine axiale Bewegung des flexiblen Führungsrohres 100 veranlasst. Dabei schiebt sich das flexible Führungsrohr 100 um die Bremsrolle 40 bis zu einer Endposition 102 vor und führt dabei den Draht 8 mit. Von dort wird der Draht 8 zu einer Ausgangsöffnung 106 weitergeleitet. Der gesamte Vorgang wird durch die Zufuhr eines Fluids unterstützt.
Bei allen automatisierten Einfädelvorgängen ist die federnde Elastizität des Drahtes 8 von Bedeutung. Sie führt dazu, dass sich der Draht 8 von der Bremsrolle 40 wegbiegt, infolgedessen löst er sich am jeweils vorgesehenen Ablösepunkt wieder von der Bremsrolle 40, Ferner kann er beispielsweise im Falle eines fluidgestützten Verfahrens durch Führungsrillen im Gehäuse 42 geführt werden. Dabei ist es zweckmässig, den Draht längs der Achse der Bremsrolle 40 leicht zu versetzen, um Konfliktsituationen zwischen ein- und auslaufendem Draht zu vermeiden. Dies kann auch durch eine entsprechende Führung im Kanalsystem 57 unterstützt werden.

## Patentansprüche

1. Drahtlaufsystem für eine Funkenerosionsvorrichtung mit wenigstens einer Drahtelektrode (8), die durch einen Drahtzufuhrbereich (B) des Drahtlaufsystems zur Arbeitszone transportierbar ist, dadurch gekennzeichnet, dass die Drahtelektrode (8) mittels einer beliebig geformten, und im wesentlichen geschlossenen Rohranordnung (30,32,34) vom Abwicklungsbereich (A) bis zur Arbeitszone führbar ist, und dass Mittel zum Erzeugen einer Fluidströmung vorgesehen sind die zumindest während des Einführens des Drahtes (8) in die Rohranordnung (30,32,34) in dieser wirksam sind.

2. Drahtlaufsystem nach Anspruch 1, dadurch gekennzeichnet, dass Mittel zum Erzeugen einer Fluidströmung eine Injektordüse (28) ist, die zur Einführung des Drahtes (8) in eine Rohranordnung (30,32,34) derart angeordnet ist, dass die Injektordüse (28) den Draht (8) ansaugt und dann mittels einer Fluidströmung durch die Rohranordnung (30,32,34) bis zur Arbeitszone transportiert.

3. Drahtlaufsystem nach Anspruch 1 oder 2, dadurch gekennzeichnet, dass eine oder mehrere Drahtumlenkrollen (36, 38) zur Änderung der Bewegungsrichtung des Drahtes (8) im Zufuhrbereich (B) vorgesehen sind.

4. Drahtlaufsystem nach Anspruch 3, dadurch gekennzeichnet, dass die Umlenkrollen (36, 38) mittels Fluidstrahl angetrieben sind.

5. Drahtlaufsystem nach Anspruch 3 oder 4, dadurch gekennzeichnet, dass die Drahtumlenkrollen (36, 38) jeweils in einem Gehäuse angeordnet sind und diese Gehäuse auf Drehachsen montiert sind.

6. Drahtlaufsystem nach Anspruch 5, dadurch gekennzeichnet, dass die Ablösepunkte des Drahtes (8) von der jeweiligen Rolle (36, 38) auf der jeweiligen Gehäusedrehachse liegen.

7. Drahtlaufsystem nach einem der voranstehenden Ansprüche 1 bis 6, bei welchem der Draht (8) zunächst auf einer durch einen Spulenmotor (12) angetriebene Vorratsspule (10) aufgewickelt ist, dadurch gekennzeichnet, dass
a) der von der Vorratsspule (10) abgewickelte Draht (8) zunächst um wenigstens eine Stabilisierungsumlenkrolle (14, 16, 14', 16') geführt ist; und
b) diese Stabilisierungsumlenkrolle(n) an einem Schwenkarm (18) angebracht ist bzw. sind.

8. Drahtlaufsystem nach Anspruche 7, dadurch gekennzeichnet, dass die Drehachse (20) des Schwenkarms (18) zu der Drehachse der Vorratsspule (10) und/oder zu der bzw. den Drehachse(n) der Stabilisierungsumlenkrolle(n) (14, 16, 14', 16') im Wesentlichen senkrecht angeordnet ist.

9. Drahtlaufsystem nach Anspruch 7 oder 8, dadurch gekennzeichnet, dass der Ablösepunkt des Drahtes (8, 8') von der Stabilisierungsumlenkrolle bzw. der Stabilisierungsumlenkrollen (14, 16, 14', 16') und jeder Ablösepunkt des Drahtes (8, 8') von der Vorratsspule (10) während des Abwickelvorgangs fortwährend im wesentlichen senkrecht übereinander liegen.

10. Drahtlaufsystem nach einem der Ansprüche 7 bis 9 dadurch gekennzeichnet, dass die Verlängerung der Drehachse des Schwenkarms (18) mit dem Ablösepunkt des Drahtes (8) von des Stabilisierungsumlenkrolle (16') bzw. nach der letzten Stabilisierungsumlenkrolle (16) und vorzugsweise auch mit den unmittelbar darauf folgenden Drahtlauf im Wesentlichen zusammentrifft.

11. Drahtlaufsystem nach einem der Ansprüche 7 bis 10 dadurch gekennzeichnet, dass
a) der Draht (8) hinter der bzw. den Stabilisierungsumlenkrolle(n) (14, 16, 14', 16') gegenläufig um eine bzw. zwei weitere Umlenkrollen geführt ist;
b) dabei wenigstens eine dieser Umlenkrollen (22) durch Federmittel (24) elastisch nachgiebig befestigt ist;
c) Messmittel über die Position dieser Umlenkrolle (22), der Federmittel (24) und/oder weiterer Hilfsmittel die jeweils anliegende Drahtzugspannung bzw. die zugrundeliegende Kraft ermitteln; und
d) eine Steuereinrichtung den Spulenmotor (12) diesen Messwerten und/oder Sollwerten entsprechend steuert.

12. Drahtlaufsystem nach einem der Ansprüche 1 bis 11 dadurch gekennzeichnet, dass der Drahtabwicklungsbereich (A) ganz oder teilweise doppelt oder mehrfach ausgebildet ist und vorzugsweise zusätzliche Hilfsmittel (25-27,25'-27') zur Übergabe des Drahtes (8,8') an die Injektordüse (28) vorgesehen sind.

13. Drahtlaufsystem nach einem der Ansprüche 1 bis 12 dadurch gekennzeichnet, dass vor dem ersten Führungskopf (76) Bremsmittel auf den Draht (8) wirken.

14. Drahtlaufsystem nach Anspruch 13, dadurch gekennzeichnet, dass
a) die Bremsmittel eine von einem Bremsmotor angetriebene Bremsrolle (40) umfassen;
b) der eingefädelte Draht (8) wenigstens nahezu einmal diese Bremsrolle (40) umschlingt; und
c) der Draht (8) sich mit der Bremsrolle (40) aufgrund von Reibungskräften in Wirkeingriff befindet.

15. Drahtlaufsystem nach einem der Ansprüche 1 bis 14, dadurch gekennzeichnet, dass
a) ein nach den Drahtführungsköpfen (76, 78) der Funkenerosionsvorrichtung positionierter Zugmotor (90) vorgesehen ist und mit dem Draht (8) in Wirkeingriff steht; und
b) der Zugmotor (90) mit Bremsmitteln und/oder einem Spulenmotor (12) an der Vorratsspule (10) derart zusammenwirkt, dass eine Zugspannung im Draht entsteht.

16. Drahtlaufsystem nach Anspruch 15, dadurch gekennzeichnet, dass der Zug- (90) und der Bremsmotor zur Einstellung einer gewünschten Arbeitsspannung, welche vorzugsweise grösser als im Abwicklungs- bzw. Zufuhrbereich (A, B) ist, der Drahtelektrode mit unterschiedlichen Geschwindigkeiten antreibbar sind.

17. Drahtlaufsystem nach einem der Ansprüche 13 bis 16, dadurch gekennzeichnet, dass
a) die Bremsrolle (40) in einem Gehäuse (42) angeordnet ist;
b) eine Drahtöffnung (56) in dem Gehäuse (42) derart vorgesehen ist, dass der Draht (8) zunächst im Wesentlichen tangential an der Bremsrolle (40) anliegt; und
c) wenigstens eine weitere Öffnung (44-54) im Gehäuse (42) ausgebildet ist, derart, dass zumindest während des Einfädelns Fluidströme in das Gehäuse (42) eingelassen werden, welche im Wesentlichen zur Bremsrolle (40) tangential sind und den Draht (8) um die Bremsrolle (40) herumführen.

18. Drahtlaufsystem nach einem der Ansprüche 1 bis 17, dadurch gekennzeichnet, dass der Draht (8) mittels eines Fluides um die Bremsrolle (40) führbar ist.

19. Drahtlaufsystem nach einem der Ansprüche 1 bis 17, dadurch gekennzeichnet, dass der Draht (8) mittels eines flexiblen Führungsrohres (100) um die Bremsrolle (40) führbar ist.

20. Drahtlaufsystem nach einem der Ansprüche 1 bis 17, dadurch gekennzeichnet, dass
a) ein Einfädelriemen (64,64') derart angeordnet ist, dass er dem Verlauf der Mantelfläche der Bremsrolle (40) teilweise folgt und den zunächst im Wesentlichen tangential an der Bremsrolle (40) anliegenden Draht (8) während des Einfädelns aus dessen Laufrichtung ablenkt und um die Bremsrolle (40) führt; und
b) der Einfädelriemen (64,64') derart beweglich angeordnet ist, dass er seine Position während des Einfädelns derart verändert, dass er den Weg für die weitere Laufrichtung des Drahtes freigibt.

21. Drahtlaufsystem nach einem der Ansprüche 1 bis 20, dadurch gekennzeichnet, dass eine Ansaugdüse (82) und wenigstens ein Rohr (84) hinter dem zweiten Führungskopf (78) angeordnet sind, derart, dass eine Ansaugdüse (82) zumindest während des Einfädelns den Draht (8) zusammen mit einem Fluid ansaugt, und dieses Fluid den Draht durch das Rohr (84) zum Zugmotor (90) transportiert.

22. Drahtlaufsystem nach Anspruch 21, dadurch gekennzeichnet, dass Änderungen der Bewegungsrichtung des Drahtes in einem Entsorgungsbereich, zumindest während des Einfädelns, durch Fluidstrahl angetriebene Umlenkrollen erfolgt.

23. Drahtlaufsystem nach einem der Ansprüche 1 bis 22, dadurch gekennzeichnet, dass
a) hinter dem Zugmotor (90) eine Drahtschneidevorrichtung (92) angeordnet ist; und
b) die Drehzahl der Drahtschneidevorrichtung (92) zur Drahtlaufgeschwindigkeit proportional ist.

24. Drahtlaufsystem nach einem der Ansprüche 1 bis 23, dadurch gekennzeichnet, dass wenigstens eines der Rohrstücke (30, 32, 34) teleskopisch ausgebildet ist.

25. Drahtlaufsystem nach einem der Ansprüche 1 bis 18, dadurch gekennzeichnet, dass der Draht (8) manuell um die Bremsrolle (40) geführt wird, wobei folgende Einfädelhilfen vorgesehen sind
a) Einlaufnuten (35) zum Ergreifen des Drahtes (8) nach dem Austritt vom Zufuhrbereich (B); und/oder
b) Einlaufnuten (37) zum Einführen des Drahtes (8) in den ersten Drahtführungskopf (76).

26. Drahtlaufsystem nach Anspruch 25, dadurch gekennzeichnet, dass die Einfädelhilfe (39) zur elektrischen Drahtpräsenzdetektion geeignet ist.

27. Drahtlaufsystem nach einem der Ansprüche 13 bis 26, dadurch gekennzeichnet, dass nach der Bremsrolle (40) eine Injektordüse (41) vorgesehen ist.

28. Drahtlaufsystem nach einem der Ansprüche 3 bis 27, dadurch gekennzeichnet, dass eine oder mehrere der verwendeten Umlenkrollen (14, 16, 22, 26, 36, 38, 86, 88)
a) als zylindrische Scheibe ausgebildet sind;
b) in der Mantelfläche jeweils eine gleichmässig umlaufende Rille vorgesehen ist; und
c) diese Rille sich symmetrisch zur Mantellinie und Richtung der Scheibenachse verjüngt.

29. Drahtlaufsystem nach einem der Ansprüche 13 bis 28, dadurch gekennzeichnet, dass die Bremsrolle (40) mit Schrägungen (67, 68) ausgebildet ist welche den Draht (8) in eine V-Nut führen.

30. Verfahren zur funkenerosiven Bearbeitung eines Werkstücks mittels einer in einem Abwicklungsbereich (A) bereitgestellten Drahtelektrode (8), dadurch gekennzeichnet, dass die Drahtelektrode (8) mittels eines Fluids in ein zwischen Abwicklungsbereich (A) und Bearbeitungsbereich befindliches Rohrleitungssystem geleitet wird und, dass dieses Fluid die Drahtelektrode (8) zum Bearbeitungsbereich befördert, wobei die Einwirkung des Fluids zumindest während des Einfädelvorgangs anhält.
